# EUROPEAN PATENT APPLICATION

(11) **EP 4 738 175 A1**
(43) Date of publication of application: **06.05.2026**
(21) Application number: 24210479.2
(22) Date of filing: 04.11.2024
(51) Int. Cl.: G06F 30/18, G06F 30/27, G06F 30/13, G05B 19/418

(54) **METHOD FOR OBTAINING A TOPOLOGIC MODEL OF ONE OR MORE COMPONENTS OF AN INDUSTRIAL PLANT**

(71) Applicant: ABB SCHWEIZ AG, 5400 Baden (CH)
(72) Inventor: SCHOCH, Nicolai, 69120 Heidelberg (DE); PRETLOVE, John, 1338 Sandvika (NO); GRUENER, Sten, 69514 Laudenbach (DE); HOERNICKE, Mario, 76829 Landau (DE); BORRISON, Reuben, 68782 Brühl (DE)
(74) Representative: Maiwald GmbH

(57) **Abstract**

The disclosure relates to a method (100) for obtaining a topologic model of one or more components of an industrial plant, the method comprising:
- (102) obtaining image data of one or more components of the industrial plant;
- (103) providing the image data of the one or more components of the industrial plant to an AI processing component (44) for processing;
- (104) receiving geometry data of the one or more components of the industrial plant based on the processed image data; and
- (105) obtaining by the AI processing component (44) the topologic model of one or more components of the industrial plant based on the geometry data of the one or more components, wherein the topologic model comprises information about a physical arrangement of the one or more components within the industrial plant.

## Description

### TECHNICAL FIELD

The present invention relates to a method for obtaining a topologic model of one or more components of an industrial plant, one or more computer program products and a data processing system.

### BACKGROUND

Industrial plants, such as those in the oil and gas, chemical, mining, and water treatment industries, comprise numerous interconnected components, including tanks, pipes, valves, controllers, and other critical equipment. Accurate documentation of the physical layout and interconnections of these components is essential for design, maintenance, safety compliance, and operational efficiency. Traditionally, the creation and maintenance of such documentation rely on detailed engineering drawings, including Piping and Instrumentation Diagrams (P&IDs), wiring diagrams, and control system Human-Machine Interfaces (HMI).

In existing practices, obtaining an accurate "as-built" digital model of an industrial plant, especially in brownfield facilities (existing plants with potential undocumented modifications), poses significant challenges. Legacy documentation may be incomplete, outdated, or stored in inaccessible formats, complicating efforts to generate comprehensive and up-to-date digital representations. Moreover, the manual process of updating and verifying these models is labor-intensive, time-consuming, and prone to human error, exacerbated by the demographic shift where experienced maintenance and operations personnel are retiring, and there is a shortage of skilled replacements.

Advanced technologies such as 3D laser scanning and Building Information Modeling (BIM) have been employed to create digital representations of industrial plants. However, these solutions are often expensive, require specialized equipment, and may not integrate seamlessly with existing engineering documentation or control systems.

### SUMMARY

The above problem or need is at least partially solved or alleviated by the subject matters of the independent claims of the present disclosure, wherein further examples are incorporated in the dependent claims.

According to an aspect of the present disclosure, there is provided a method for obtaining a topologic model of one or more components of an industrial plant, the method comprising:
- obtaining image data of one or more components of the industrial plant;
- providing the image data of the one or more components of the industrial plant to an AI processing component for processing;
- receiving geometry data of the one or more one or more components of the industrial plant based on the processed image data; and
- obtaining by the AI processing component the topologic model of one or more components of the industrial plant based on the geometry data of the one or more components, wherein the topologic model comprises information about a physical arrangement of the one or more components within the industrial plant.

A topologic model in the context of industrial plant engineering may refer to a digital representation that captures and visualizes the physical arrangement of one or more components within an industrial plant. The topologic model may depict the spatial positions of individual components such as but not limited to machinery, tanks, pipes, valves, and control units within the industrial plant. The topologic model of the one or more components may e.g. comprise an orientation and alignment of the one or more components relative to each other, ensuring an accurate representation of the plant's layout. Thus, the topologic model may provide a foundational structure that illustrates how various components are distributed and oriented within the industrial plant, facilitating a clear understanding of the overall physical setup.

Image data may comprise a broad spectrum of visual information of the one or more components or parts of an industrial plant. For example, image data may comprise 2D visual information such as but not limited to sequential photographs, video frames, panoramic shots, scans, or annotated images of the one or more components. These images may be acquired from imaging sensors, such as but not limited to cameras, wearable devices, drones, or stationary cameras. The image data may be acquired from different perspectives. By acquiring different or multiple perspectives, more comprehensive image data to accurately reconstruct depth, shape, and structure of the one or more components may be generated, for example.

For example, sequential photographs or video frames may be captured as a person or a drone navigates through the industrial plant. The acquisition of image data may be facilitated through the integration of an AI assistance system. For example, the acquisition process by a person may be guided. Thus, a person may be provided with real-time instructions on which areas or components of the industrial plant should be covered and from which perspectives the images or videos should be taken. For generating a basic topologic model showing primary process elements, such as tanks, valves, pumps, and major piping systems, low-resolution images or video frames may be sufficient. The images or video frames may be automatically stitched together using image/video stitching tools. To minimize occlusions and ensure all components may be visible, the AI assistance system may direct the acquiring of images from multiple perspectives. For fast processing and identification, low resolution images may be used in a first imaging run, for example. By utilizing low-resolution images or video, large volumes of image data may be processed, enabling the rapid construction of a basic topologic model, for example. Additionally, higher resolution image data may be collected in a subsequent imaging run to create a more detailed topologic model, for example. Further, industry 4.0 technologies may be incorporated to enhance the acquisition of image data. Industry 4.0 may refer to the fourth industrial revolution characterized by the integration of cyber-physical systems, the Internet of Things (IoT), cloud computing, and artificial intelligence into manufacturing and industrial processes. For example, obtaining image data may be facilitated by loT devices and sensors, autonomous robots and drones, augmented reality (AR) devices, edge computing, and 5G connectivity. For example, autonomous drones and robots may be equipped with imaging sensors and may navigate the plant autonomously, capturing images and videos from various angles and elevations. They may access hazardous or inaccessible areas, ensuring comprehensive data coverage, and can be programmed for scheduled scanning to keep the topologic model updated with minimal human intervention. This automated data collection may e.g., reduce the need for manual effort and increases safety by minimizing human exposure to dangerous environments. Further, industry 4.0 technologies such as the Asset Administration Shell (AAS) may be utilized to support the identification and classification of plant components. The Asset Administration Shell (AAS) may be an Industry 4.0 concept, serving as the digital twin of a physical asset such as a machine or a component within an industrial plant. It may provide a standardized interface through which all relevant information about an asset can be digitally captured, managed, and exchanged. This may include technical data, documentation, 3D models, operational states, and other metadata. The AAS may create a unified and interoperable communication framework that facilitates data exchange between different systems and components. In the context of generating a topologic model of an industrial plant, the AAS may be utilized to support the identification and classification of plant components, for example. By integrating e.g., product photos, 3D CAD models, and photorealistic renderings derived from these models into the AAS, a comprehensive data repository for each component may be established. These standardized data may be incorporated into the AI processing component, enabling the AI processing component to recognize, classify, and analyze components and their connections with greater precision. This may not only allow for more precise modeling but also may support advanced applications such as predictive maintenance, simulation, and optimization of operational processes, for example. The AI processing component may be an AI/ML component that include natural language processing (NLP) models that are specially trained to analyze technical documentation and specifications semantically. One example of this may be the use of a generative pre-trained transformer model (GPT), which was trained on an extensive data set of technical documents.

The AI processing by the AI processing component may comprise preliminary preprocessing steps that may be performed to enhance data quality and compatibility, for example. Such preprocessing may comprise e.g. techniques such as but not limited to noise reduction, contrast adjustment, and sharpening. Further, the image data may comprise metadata information such as timestamps, camera orientation data or similar to provide contextual relevance for each image or video frame, for example. The AI processing component may employ algorithms to identify and classify various components within the industrial plant. Utilizing techniques such as convolutional neural networks (CNNs) and deep learning models, the AI processing component may detect components like tanks, valves, pumps, pipes, control cabinets, or similar. Further, by using algorithms like Neural Radiance Fields (NeRF) and/or Stable Video 3D (SV3D), the AI processing component may reconstruct a geometry or geometry data of identified components from the image data. By analyzing the depth and spatial relationships derived from sequential frames and varying angles or perspectives, the AI processing component may determine a shape, size, and position of the one or more components within the industrial plant. Thus, utilizing sophisticated algorithms, the AI component may synthesize this information to understand the three-dimensional (3D) structure and layout of the one or more components within the industrial plant. The AI processing component may organize the reconstructed 3D geometries into a coherent spatial framework that may mirror the actual physical layout of the industrial plant, for example. This may involve assigning precise coordinates to each component based on their spatial measurements to ensure accurate placement within the model. Further, techniques such as monocular depth extraction may be incorporated to generate geometry data from the image data. For example, The AI processing component may apply monocular depth extraction algorithms to the image data. Therefore, deep learning models, such as convolutional neural networks (CNNs), may be trained to estimate depth from monocular images or the 2D images. The output may be a depth map for each image, where each pixel is assigned a depth value relative to the imaging sensor. Depth maps may be combined with the original images to reconstruct 3D point clouds representing the spatial positions of objects in the scene, for example. The point clouds may be processed to identify geometric features such as planes, edges, and surfaces. Geometric data, including dimensions, shapes, and spatial relationships of components, may be extracted from the image data. Thus, incorporating monocular depth extraction may allow for the generation of geometry data from single-camera images or video sequences.

Further, it may be ensured that each of the one or more components is correctly oriented relative to fixed reference points within the industrial plant. The one or more components may further be organized according to their functional and operational groupings, enhancing the logical flow and accessibility within the plant layout, for example. Thus, using the geometry data, the AI component may generate the topologic model that reflects the physical arrangement of the one or more components. Physical arrangement may refer to a position and layout of the one or more components within an industrial plant. This may encompass the positioning, orientation, function, and distribution of each of the one or more components in a three-dimensional space, for example. To enhance the accuracy and reliability of the topologic model, the AI processing component may employ an interactive approach. This may mean that the AI processing component may prompt a user to verify the placement and orientation of certain components, for example in cases where the geometry data is ambiguous or incomplete. Based on user inputs, the AI processing component may request additional image data, e.g., from specific perspectives of the one or more components to resolve uncertainties and refine the spatial arrangement. This iterative feedback loop may ensure that the topologic model remains accurate and reflective of the actual plant layout.

In an example, the topologic model may further comprise information about physical connections and/or input/outputs of the one or more components within the industrial plant. Physical connections may refer to the tangible linkages between various components within the industrial plant, such as but not limited to piping systems, electrical wiring, data cables, and mechanical joints. The AI processing component may utilize e.g. advanced computer vision algorithms and/or machine learning techniques to detect and map these physical connections from the image data. For example, Convolutional Neural Networks (CNNs) for Object Detection and Classification may be utilized. CNN-based models like YOLO (You Only Look Once) and Faster R-CNN may be trained to identify and classify various components (e.g., valves, pipes, tanks) within the image data. By recognizing specific components, the AI processing component may infer potential connections based on the spatial proximity and alignment of detected components, for example. Another approach may be the usage of Semantic Segmentation algorithms. Semantic segmentation may involve partitioning an image into regions with different semantic meanings. Models like Mask R-CNN and U-Net may be utilized for this. These algorithms may segment different parts of the image to distinguish between various types of connections, such as electrical wiring, piping systems, and structural supports. In another example Graph-based algorithms may be used to generate information about physical connections. Graph-based algorithms may represent image data in terms of nodes (components) and edges (connections). Techniques like Graph Neural Networks (GNNs) may capture complex relationships within the data. For example, after identifying components using CNNs, graph-based algorithms may establish and map the connections between them based on spatial relationships and predefined rules. GNNs may optimize the network of connections, ensuring that the topologic model accurately reflects an operational flow within the plant. Another approach may be using Feature Matching and Keypoint Detection algorithms. Algorithms such as SIFT (Scale-Invariant Feature Transform) and ORB (Oriented FAST and Rotated BRIEF) may detect and describe local features in images, enabling robust feature matching across different views. These algorithms may track and match features across multiple images or video frames to identify continuous connections like pipelines or cables. By matching keypoints from different perspectives, these algorithms aid in reconstructing the 3D geometry of connections, enhancing the spatial accuracy of the topologic model. By leveraging models such as but not limited to CNNs, semantic segmentation algorithms, graph-based approaches, feature matching techniques, and 3D reconstruction methods, the AI processing component may transform image data into a detailed and precise topologic model. Physical connection mapping may focus on detecting and mapping continuous, structural linkages between components, whereas I/O identification may emphasize recognizing and delineating interfaces through which data, materials, or control signals flow, for example. Follow-object tracking algorithms may enable the AI processing component to continuously monitor and follow a specific component or feature across multiple frames of image data. These algorithms may maintain the identity and trajectory of the target object, even as it moves or changes orientation. For example, follow-object tracking may be employed to trace the path of a pipe or conduit. By following the pipe's trajectory, the AI may identify, and map all connected I/Os along its length, ensuring that no input or output points are overlooked. Further, motion tracking algorithms may detect and analyse the one or more components within a sequence of images or video frames. Additionally, in a scenario where the one or more components or their connections are subject to movement, such as e.g. rotating valves or adjustable supports, moving object tracking algorithms may be utilized to detect and map the dynamic I/Os associated with these components. This may ensure that the topologic model accurately reflects both static and dynamic interfaces within the industrial plant, for example.

In an example, the image data may comprise geo-spatial information in the form of one or more of GPS positions, rotation angle, acceleration, and speed of movement. For example, by providing geo-spatial sensors with e.g., GPS modules, gyroscopes, accelerometers, or compasses to the imaging sensor, each image or video frame may be tagged with precise location data relative to the plant's coordinate system. The image sensor's orientation may be captured, ensuring that stitched images maintain correct alignment and perspective, for example. Data on the image sensor's movement dynamics (e.g., acceleration and speed) may assist in translating temporal data into spatial measurements, such as determining the length of a pipe based on walking duration and speed. For example, as an operator or drone moves along a pipe, the GPS data may record incremental position changes. By knowing the duration of movement and the speed at which the operator or drone is moving, the AI processing component may calculate the precise length of the pipe segment being traversed. This translation may ensure that the topologic model accurately reflects the physical dimensions and spatial relationships of e.g., a pipe within the industrial plant. Further, stitching tools combined with geo-spatial data may provide a seamless and continuous mapping of components, reducing gaps and overlaps that could lead to inaccuracies in the topologic model. Additionally, by methodically following along pipes or circumnavigating reactors, the AI processing component may ensure that all I/Os are detected and accurately positioned within the model. Rotation angle data may maintain the correct orientation of stitched images, ensuring that spatial relationships are preserved accurately.

In an example, the image data may further comprise geo-location tags and the method may further comprise determining a distance between the one or more components of the industrial plant with at least another component of the industrial plant. Geo-location tags may refer to metadata embedded within image data or video data that provide precise spatial information about the location and orientation of the imaging sensor at the time of image capture. Geo-location tags may e.g., be used to mark components, wherein the position information may come from GPS data or other sources such as but not limited to Wi-Fi localisation, mobile phone mast triangulation, manually entered locations e.g., position information entered directly by a user or operator, or other sensor data like barometers, magnetometers, or accelerometers to determine a position. By providing geo-location tags to image data, each frame of the acquired images may be associated with geographic and positional data, for example. This integration may ensure that the acquired images may be contextually associated with real-world positions within the industrial plant. For example, each geo-location tag may provide a latitude and longitude of the imaging sensor at the moment of capturing a specific video frame. By mapping these coordinates to known reference points or directly to components within the plant, the AI processing component may establish the exact positions of each component within the topologic model. For example, when moving from one component (Component 1) to another (Component 2), the change in GPS coordinates may be used to calculate a straight-line distance or the path length between the two points. This calculation may account for the actual physical layout and any obstructions or deviations in the path. By incorporating geo-location tags, the topologic model may capture more exact physical distances between components, offering a more accurate and reliable digital twin of the industrial plant.

In an example, the method may further comprise determining a transport time of a fluid or gas between the components of the industrial plant based on the determined distance between the components. Transport time may refer to the duration it takes for a fluid or gas to travel from one component (e.g., Pump) to another component (e.g., Valve) within the industrial plant. A flow velocity of the fluid or gas traveling through the pipe connecting the components may be determined by direct measurement or by historical data or predictive models based on system conditions (such as fluid type, pressure, pipe diameter, and temperature). Al-driven predictive models may analyse operational data to predict average flow speeds under specific conditions, for example. With both the distance and the flow velocity now known, the transport time may be calculated. Additionally, once the transport time for a fluid or gas between two components in an industrial plant has been determined, this information may be leveraged to analyse energy losses during transport. For example, by using the transport time as a baseline, the AI processing component may analyse energy losses that occur during the transport of fluids or gases between components. Increases in transport time, compared to ideal conditions, may e.g., reveal inefficiencies such as frictional losses, pressure drops, and heat transfer losses. This may help to identify inefficiencies in the system, for example.

In an example, the method may further comprise assembling the topologic model of the one or more components to a topologic plant model of the industrial plant. The physical arrangement of each of the one or more components with at least another component may e.g., be mapped into a common coordinate system. This may ensure that the topologic plant model accurately reflects the relative positioning of components within the plant and relative to each other. Using geo-spatial data (e.g., GPS coordinates, rotation angles each component may be arranged in the exact location relative to other components. The connections between components, such as pipelines, electrical wiring, and control systems, may be established based on the data captured in the individual topologic models. This may include e.g. piping routes between pumps, valves, and heat exchangers; electrical connections between control systems and the components they manage; control flow pathways for monitoring and automation systems. The topologic plant model may integrate dynamic operational data, such as transport times for fluids and gases moving between components; flow rates and pressure conditions in pipelines; energy losses detected during transport, including frictional, pressure, and heat transfer losses. This operational data may ensure that the topologic plant model not only represent the physical layout but also may simulate the functional performance of the plant's systems, for example. Therefore, the assembled topologic plant model may not only provide a detailed overview of the plant's physical layout but also may incorporate functional data such as transport times, flow dynamics, and energy losses.

In an example, a Generative AI model, such as a large language model, LLM, may be used to output the generated topologic model into a standardised format. A Generative AI model, such as a Large Language Model (LLM) or similar AI systems, may be used to process the detailed data from the assembled topologic model and output it into a required format. The LLM may analyse the structured data from the topologic model and translate it into formats compatible with industry standards (e.g., P&ID diagrams, XML, JSON, or proprietary formats for plant management systems). The automatic generation of standardised topologic models may facilitate interoperability with existing planning systems, for example. This may e.g., enable simple integration into monitoring, maintenance, or optimisation systems. The LLM may further process the structured data from the topologic model and converts it into a graph-based format by recognizing the relationships between components (nodes) and mapping their physical and operational connections (edges), for example. A graph-based format may provide a clear and intuitive way to visualize and manage complex systems by focusing on the relationships and interdependencies between different components. Nodes may represent components of the plant (e.g., pumps, valves, heat exchangers), whereas edges may represent the connections between these components (e.g., pipelines, electrical connections, control systems). A graph-based format may be highly versatile, enabling easy manipulation, querying, and analysis of the topologic model. This format may also be exported to standard graph representations like GraphML, JSON Graph, or other graph databases like Neo4j or RDF, for example.

The method described may offer benefits in various industrial scenarios, particularly in both brownfield and greenfield facilities. For example, in brownfield facilities or plants, comprehensive topologic models of the plant layout and interconnections are often not available. Existing documentation, if it exists, may be incomplete, outdated, or stored in legacy systems that are difficult to access or extract information from. There's a risk that these documents do not accurately reflect the current state of the plant due to modifications over time that were not properly documented.

In this case, the ability to provide an accurate "as-built" model may be beneficial. By utilizing Al-based image data analysis as the method describes, the physical layout and connections of the plant may be captured and converted into a standard digital format. This digital model can then be integrated with modern, standard descriptions, facilitating upgrades, maintenance, and operational efficiency improvements. Further, in modern greenfield facilities or those in the commissioning phase, it may be important to confirm that the physical plant matches the documented design. During the final stages of construction or commissioning, "as-built" conditions may deviate from the planned design due to last-minute changes or unforeseen issues. Applying the method may allow for verification of the physical plant against the documented design. The AI processing component may generate an accurate topologic model of the plant as it has been built, highlighting any deviations from the planned design. This may ensure that the digital documentation remains accurate and up-to-date, which may be important for future maintenance, safety assessments, and regulatory compliance, for example.

In an example, the topologic model is stored in a database. The generated topologic model, comprising information about the physical layout, component interconnections, transport times, and operational parameters, may be stored in a database, such as a centralized database. This database may serve as a single source of truth for the plant's infrastructure, for example. The topologic model may be stored in a structured format, such as a relational database or a graph database, depending on the complexity and nature of the data. For graph-based models, graph databases like Neo4j or OrientDB may be utilized to efficiently store and query the interconnected data. Data integrity checks may be implemented to ensure the accuracy and consistency of the stored models. The database may support versioning, allowing for tracking changes to the topologic model over time. This may enable e.g., a plant operator to maintain a history of modifications, updates, and enhancements to the plant layout, facilitating effective change management and audit trails. The database may not only store the generated topologic model but also comprises reference models of typical industrial plant components. Therefore, a comprehensive database may be established, comprising detailed reference models of standard industrial plant components. These components may include such as but not limited to pumps, valves, tanks, reactors, pipes, and other commonly used equipment. The reference models may further comprise various specifications, such as geometric dimensions, shapes, materials, connection types, and operational parameters. It may also comprise images, 3D models, and other multimedia representations to enhance recognition capabilities. The database may serve as a reference and training for the AI processing component. The AI processing component may also utilize the reference database e.g., to train machine learning algorithms, including computer vision and pattern recognition models. By learning from the reference models, the ability of the AI processing component to recognize and classify components in the real world by using a database of typical objects may be improved. This may reduce the error rate during recognition and speeds up the identification of components, for example. For example, the database may be provided with video recordings of typical process plant equipment and components as they appear in real-world conditions. These recordings may capture the standard look and typical variations of components like valves, tanks, pumps, and pipes from multiple angles and under different lighting and operational conditions, for example. The video recordings may serve as ground truths, providing accurate representations of the one or more components' appearances, including any variations due to manufacturing differences, wear and tear, or environmental factors. The AI processing component may use these video recordings to train and fine-tune its recognition algorithms, for example. Machine learning techniques, particularly in computer vision and deep learning, may be applied to learn the visual features and characteristics of the components from the videos. By including typical variations in the video data (e.g., different models, sizes, colors, and conditions of components), the AI processing component may become adept at recognizing components despite differences in appearance. The AI processing component may reference the video-based ground truths during analysis, enabling it to recognize components as they appear in the actual plant environment. This may improve recognition accuracy in situations where components may be partially obscured, damaged, or viewed from unconventional angles, for example. The visual information from the video recordings may assist the AI processing component in accurately reconstructing the one or more components within the topologic model. The AI processing component may fill in missing details or correct partial data by referencing the typical appearances captured in the videos, for example. Utilizing video-based ground truths may allow the AI processing component to learn from realistic and practical examples, significantly improving their ability to recognize components in diverse and challenging conditions, for example.

In an example, the topologic model is compared to a previous topologic model and/or a formal model. For example, the database may maintain a historical record of all generated topologic models, allowing for retrieval and comparison of topologic models from any point in time. The AI processing component or LLM may standardize the data formats of both the current and previous topologic models to ensure compatibility. The AI processing component may automatically compare the current topologic model with one or more previous topologic models. This comparison may involve methods such as pattern recognition, similarity analysis, and differential analysis. By comparing the current topologic model with previous topologic models, the AI processing component may identify reusable components and configurations, reducing the need to design elements from scratch and saving time and resources. This comparison may also help ensure that the current topologic model adheres to established standards and best practices derived from previous projects. Differences identified during the comparison may highlight potential errors or areas that need further refinement, enabling proactive detection of issues before they escalate during implementation. Based on the comparison, the AI processing component may generate a refined topologic model. It may analyse the results to decide which elements of the previous topologic models should be incorporated, adjusted, or discarded. This may include selecting components, control logics, or process flows to be used in the formal topologic model. The AI processing component may incorporate proven components and processes from previous topologic models, adjusts the incorporated elements to meet the specific requirements of the current project, and implements optimizations and improvements identified during the comparison. By using AI processing components to analyse and integrate proven solutions from previous projects, the modelling process may be improved, leading to more efficient, accurate, and high-quality topologic models. The method may be carried out by one or more AI processing components, ensuring consistency and efficiency throughout the process. This approach may automate repetitive tasks and complex analyses, with the AI continuously learning from each project to improve future topologic model generation. The benefits and technical advantages of this method may include enhanced efficiency by accelerating topologic model generation through the reuse of proven components, improved accuracy, and quality by detecting errors and ensuring adherence to standards, for example. The AI processing component may perform both symbolic and/or semantic comparisons between the topologic model and the previous topologic model stored in the database. For example, symbolic comparison may involve matching exact terms, identifiers, or symbols used in the models. For instance, the AI processing component may recognize specific identifiers like "P-101" for a pump or "T-202" for a tank. These consistently used identifiers within documentation and models may allow the AI processing component to directly map components between the models, ensuring precision in identification. Semantic comparison may go beyond literal term matching to understand the underlying meaning of terms used in the models. For example, utilizing Natural Language Processing (NLP) techniques, the AI processing component may interpret the context and semantics of the terms. For example, if the topologic model describes a component as a "heat exchanger" and previous models use the term "thermal exchange unit," the AI processing component may recognize that these terms refer to the same type of equipment. By combining symbolic and semantic comparisons, the AI processing component may significantly enhance the robustness and accuracy of the matching process. This dual approach may ensure that all relevant matches are identified whether they are exact symbolic matches or contextually similar semantic matches.

The topologic model may also be compared to a formal model of an industrial plant stored in the database. A formal model in the context of industrial plant engineering may relate to a pre-stored industrial plant model, for example. It may be a comprehensive representation of various aspects of the plant, e.g. structured in a way that facilitates analysis, simulation, and implementation. This formal model may include detailed descriptions of process flows, control logic, and equipment specifications. It may encompass modular components, equipment functionalities, requirements (or formal requirement specifications), inputs and outputs (such as raw materials, products, signals, and energy flows), services, and tags. Formal models may also enable simulations and validations to be conducted, verifying the functionality and efficiency of the planned plant before its actual implementation, for example. They may be provided e.g. in a visual representation of the plant. The formal model may encompass a wide range of structured, hierarchical, graph-based, geometric, tabular, simulation, documentation, and control logic elements, for example.

In an example, the AI processing component may use graph algorithms to identify similarities between the topologic model and the previous topologic model. Both the topologic model and previous topologic model may be represented as graphs, where nodes represent entities such as equipment, processes, subsystems, or similar, and edges represent the relationships or interactions between these entities. This representation may allow for a detailed and intuitive depiction of the plant's structure and operations. The AI processing component may apply graph matching algorithms to compare the graphs of the topologic model and previous topologic models. These algorithms may analyse and traverse the graph structures to identify patterns, detect subgraph isomorphisms (i.e., matching substructures), and evaluate the similarity between different graph representations. For example, the AI processing component may search for subgraphs within a larger graph to identify reusable components and configurations. The graph algorithms may be integrated with AI processing components, such as NLP models, to provide a comprehensive analysis. While graph algorithms focus on structural and topological similarities, AI processing components may enhance the analysis by considering semantic similarities and contextual relevance. This combined approach may leverage the strengths of both techniques, ensuring a thorough and reliable identification process.

Further, the AI processing component may apply graph-based algorithms to check the consistency of the created topology. It may analyse the relationships between components by representing the model as a graph, where nodes represent individual plant components (e.g., pumps, valves, tanks) and edges represent the connections between these components (e.g., pipelines, electrical wiring). By applying graph matching algorithms, structural similarities and differences may be identified by searching for subgraph isomorphisms. For example, this may be areas where the structure of the graph is identical or similar. This approach may ensure that the generated topologic model is consistent and logical.

In an example, the image data may be associated with existing plant model data, wherein the existing plant model data comprises at least one or more of: P&ID diagrams, wiring diagrams, Human-Machine Interface (HMI) data, or legacy data models or other documentation. P&ID (Piping and Instrumentation) Diagrams may e.g., be schematic representations detailing the piping, equipment, and instrumentation within the plant. Wiring diagrams may e.g., be detailed illustrations of electrical connections and wiring configurations. Human-Machine Interface (HMI) data may e.g., be visual interfaces and control panels used by operators to monitor and manage industrial processes. Legacy data models may e.g., previous versions of plant's data models, which, although possibly outdated or incomplete, contain valuable information. Other Documentation may be utilized such as but not limited to 3D CAD models, tag lists, procurement documentation, Building Information Modelling (BIM) models, and any other project-related information. For example, existing, possibly outdated, or incomplete documentation, such as P&ID diagrams (Piping and Instrumentation Diagrams), HMI data (Human-Machine Interface), circuit diagrams or 3D CAD models can be used for this purpose. This may enable efficient reuse of existing information and may speed up the reconstruction process. Existing information may be used to train the Al processing component and supplement inaccurate or missing data. This may improve the accuracy and completeness of the reconstruction process of the topologic model. By associating the image data captured from the plant (such as videos or sequential images) with this existing plant model data, previously gathered knowledge to enhance the reconstruction of the topologic model may be leveraged. For example, Operational Technology (OT) Distributed Control System (DCS) Infrastructure may be integrated. The OT DCS infrastructure may comprise physical cabinets such as enclosures housing control components like Programmable Logic Controllers (PLCs), power supplies, and communication modules, or I/O junction boxes such as connection points for input and output signals that interface between sensors, actuators, and control systems, or controllers, for example. By analyzing the physical arrangement and components of the OT DCS infrastructure, additional positional clues about the plant's topology and layout may be gathered. For example, markings and text labels on equipment, parsed from the video data, may be matched to known components in the existing documentation. This may allow for more precise identification and placement of components within the topologic model.

In the process of generating and refining the topologic model of an industrial plant, integrating existing plant model data may not only enhance the accuracy and completeness of the reconstruction but may also provide a means to validate and challenge the reconstruction process of the Al processing component. By associating the image data captured from the plant with existing documentation and data sources, potential errors or hallucinations generated by the Al processing component may be detected and corrected. For example, the Al processing component utilizing e.g., a generative Al model, may sometimes produce elements in the reconstructed topologic model that do not exist, known as hallucinations. These may occur due to misinterpretations of visual data, artifacts in images, or limitations in the Al model's training. By comparing the Al-generated topologic model with existing plant data, the system may identify discrepancies where components or connections are suggested by the AI but are not present in any existing documentation. Such discrepancies may be flagged for further review, indicating potential hallucinations or errors in the reconstruction, for example. Therefore, the AI processing component may perform an automated comparison between the reconstructed topologic model and the existing plant model data. Components or connections that do not have a corresponding entry in the existing data may be identified. In cases of significant discrepancies, an operator may be prompted to verify the Al's findings, ensuring that any unique or new components are correctly accounted for. Based on the validation process, the AI model may be adjusted to correct any hallucinations, and the topologic model may be updated accordingly.

In an example, the AI processing component generates an uncertainty score for the topologic model, indicating the confidence level of the generated model. The AI processing component may determine an uncertainty score for the topologic model or specific components within the model, quantifying the AI's confidence in the accuracy of recognized components, connections, and the overall topology. This score may be represented numerically, such as a percentage, or categorically, such as high, medium, or low confidence, for example. To calculate this score, the AI processing component may employ machine learning techniques, including analyzing probability distributions of model outputs, evaluating confidence intervals, or utilizing black-box methods to estimate uncertainty. For example, the AI processing component may use the distance between embeddings in the feature space to derive uncertainty scores. Larger distances may indicate higher uncertainty about the recognition or classification of a component. In the case of generative AI models, the output may include probability scores for each generated token or element, for example. Lower probabilities may correspond to higher uncertainty, allowing the AI to assign uncertainty scores accordingly. Additional methods, such as ensemble techniques or Monte Carlo dropout, may be used to obtain uncertainty estimates from models where internal workings are not fully interpretable, for example. Incorporating a human-in-the-loop mechanism may further enhance the reliability of the topologic model by involving e.g., human experts in assessing and verifying the Al-generated output. For example, a human-in-the-loop may assess the resulting output. This may mean that e.g., operators may review the digital model to verify that all components are correctly identified and appropriately placed within the physical layout of the plant. For instance, operators may trigger the deployment of image sensors or cameras to specific areas of the plant that require further inspection. For example, if a particular section of piping appears ambiguous or if a newly installed component is not clearly captured in the initial video sequence, targeted imaging can be conducted. Operators may also perform physical walkthroughs of the plant to capture high-resolution images or videos of areas that need detailed analysis. This ensures that critical sections are thoroughly documented and accurately represented in the topologic model. The newly captured image data may be provided to the AI processing component, allowing the topologic model to be updated with the latest information, for example. This iterative process may ensure that the digital representation remains current and reflective of any changes or modifications made to the plant. By enabling human operators to assess the resulting representations and trigger targeted real-world data collection, it may be ensured that the topologic model remains precise, up-to-date, and reflective of the actual physical layout of the industrial plant.

The uncertainty score may also take into account discrepancies between the generated model and existing plant model data, such as P&ID diagrams, wiring diagrams, or HMI data. For example, areas where the AI processing component's predictions conflict with existing data may receive higher uncertainty scores. By cross-referencing with established documentation, potential errors or hallucinations generated by the AI processing component may be detected and flagged, for example. By incorporating the generation of an uncertainty score, the method enhances the reliability and usefulness of the generated topologic model. This effect may be leveraged by integrating a human-in-the-loop mechanism, for example. The uncertainty score may allow operators to assess the confidence level of the topologic model, while human intervention may ensure that areas of high uncertainty are addressed effectively. This approach may leverage both AI capabilities and human expertise to produce a more accurate and dependable representation of the industrial plant.

Ion an example, the method may further comprise contextual verification of the topologic model with an identified adjacent component. After a component within the topologic model is identified, the method may involve identifying one or more adjacent components connected to it. These adjacent components may include upstream or downstream equipment, interconnected machinery, or related control systems, for example. Physical and functional relationships between the identified component and its adjacent components may be analysed. For example, if the AI processing component may identify a valve, it may examine the surrounding area to locate adjacent components such as pipes, pumps, or fittings. Recognizing these adjacent or neighbouring components may provide additional context that verifies the valve's position and function within the system, for example. Further, physical, and functional relationships between the identified component and its adjacent components such as connection types may be determined, such as mechanical links, piping connections, electrical wiring, or control signals. The contextual information gathered from adjacent components may be used to confirm the correct placement and identification of the one or more components within the topologic model, for example.

According to a second aspect of this disclosure, there are provided one or more computer program products comprising instructions which, when executed by one or more data processing apparatuses, cause the one or more data processing apparatuses to carry out the method of the first aspect of this disclosure.

The computer program product(s) may be a computer program or computer programs as such, meaning a computer program consisting of or comprising program code to be executed by the data processing apparatus, in particular computer.

Alternatively, the computer program product(s) may be a product or products such as a data storage(s), in particular computer-readable data storage medium(s), on which the computer program(s) may be temporarily or permanently stored.

According to a third aspect of this disclosure, there is provided a data processing system configured to carry out the method according to the first aspect of this disclosure.

It is noted that the above aspects, examples, and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1 shows a data processing system;
Figure 2 shows a computer program with its elements; and
Figure 3 shows a method for obtaining a topologic model of one or more components of an industrial plant.

The Figures are schematic only and not true to scale. In principle, identical or like parts, elements and/or steps are provided with identical or like reference numerals in the Figures.

### DETAILED DESCRIPTION OF THE INVENTION

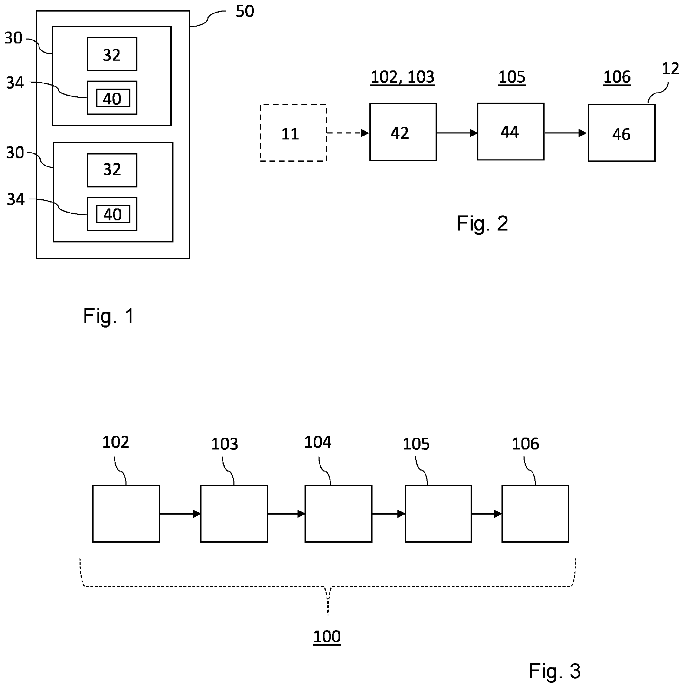

Figure 1 schematically shows a data processing system 50, which may comprise one or more data processing apparatuses 30, e.g., computers, two of which are shown for the purpose of example. The data processing system 50, in particular one or both of the data processing apparatuses 30, in particular their processors 32, may be used to carry out the method 100 for obtaining a topologic model of an industrial plant schematically illustrated in Fig. 3. Each one of the exemplary two data processing apparatuses 30 comprises at least one processing unit or processor 32, e.g., a CPU, and at least one computer program product 34, e.g., in the form of a computer-readable storage medium. Computer programs 40 are stored on the computer program products 34. The data processing system 50 may be part of the industrial plant, for example.

Figure 2 schematically shows one or more computer elements 42, 44, 46 of the computer programs 40 in the data processing system 50, which may form parts of the computer programs 40, e.g., different program code for different functions or steps of the method 100. Specifically, a computer program 40 of one of the data processing apparatuses 30 may be comprising the computer elements 42, and 46, which may be in the form of software codes or instructions for the processors 32. The other computer program 40 of the other data processing apparatus 30 in the data processing system 50 may comprise the computer elements 44. The data processing system 50 may be a distributed computing environment, where, for example, the computer elements 42, 46 are executed on a local user data processing apparatus 30, such as any stationary or mobile computer, and the computer elements 44 may be executed by a remote or server type of data processing apparatus 30, having increased processing capabilities for processing of the computer elements 44. Alternatively, the computer elements 42, 44, 46 may be all provided as part of the same computer program 40 or executed by the same data processing apparatus 30. For obtaining the topologic model, method 100 may comprise a step 102, in which the image data is obtained, in particular by the data processing apparatus 30 executing the computer element 42. For example, image data, which may be acquired from an imaging sensor 11, such as but not limited to cameras, wearable devices, drones, or stationary cameras, may comprise 2D visual information such as but not limited to sequential photographs, video frames, panoramic shots, scans, or annotated images of the one or more components. The acquisition of image data may be facilitated through the integration of an AI assistance system into the AI processing component 44. For example, the AI assistance system may utilize e.g., stitching tools to merge sequential frames into a continuous video or panorama.

For example, this may mean following the entire length frame by frame of the pipe from its starting point to its endpoint. The image data may comprise geo-spatial information in the form of one or more of GPS positions, geo-location tags, rotation angle, acceleration, and speed of movement. For example, by providing geo-spatial sensors with e.g., GPS modules, gyroscopes, accelerometers, or compasses to the imaging sensor 11, each image or video frame may be tagged with precise location data relative to a plant's coordinate system. The image sensor's 11 orientation may be captured, ensuring that stitched images maintain correct alignment and perspective, for example. For example, a duration of the drone's traversal and its speed into precise measurements of a pipe's length. The image data may be directly transmitted by data processing system 50, for example, or via a storage medium, another data processing apparatus 30, based on user input, and similar, for example.

Further, in a step 103, the image data of the one or more components of the industrial plant is provided to an AI processing component (44) for processing. The AI processing component (44) may be an AI/ML component that include natural language processing (NLP) models that are specially trained to analyze technical documentation and specifications semantically. For example, processing by the AI processing component may comprise preliminary preprocessing steps that may be performed to enhance data quality and compatibility, for example. Such preprocessing may comprise e.g., techniques such as but not limited to noise reduction, contrast adjustment, and sharpening. Further, the image data may comprise metadata information such as timestamps, camera orientation data or similar to provide contextual relevance for each image or video frame, for example.

In a next step 104, geometry data of the one or more one or more components of the industrial plant based on the processed image data is received. For example, by using algorithms like Neural Radiance Fields (NeRF) and/or Stable Video 3D (SV3D), the AI processing component may reconstruct a geometry or geometry data of identified components from the image data. By analyzing the depth and spatial relationships derived from sequential frames and varying angles or perspectives, the AI processing component may determine a shape, size, and position of the one or more components within the industrial plant. The AI processing component 44 may employ algorithms such as object recognition algorithms to identify and classify various components within the industrial plant. Utilizing techniques such as convolutional neural networks (CNNs) and deep learning models, the AI processing component 44 may detect components like tanks, valves, pumps, pipes, control cabinets, or similar.

In a next step 105, the topologic model of one or more components of the industrial plant based on the geometry data of the one or more components is obtained by the AI processing component 44, wherein the topologic model comprises information about a physical arrangement of the one or more components within the industrial plant. The topologic model may include information about the physical arrangement of the one or more components within the plant. The AI processing component 44 may utilize static image data to create a precise and detailed model of the plant without relying on temporal changes or movements within the scene, for example. Furthermore, the process of generating the topologic model may not start from scratch. That may mean, it does not rely solely on the image data. In the process of topologic model reconstruction, existing knowledge about the plant topology may be reused and integrated into the generation process. For example, existing (e.g. outdated) P&ID diagrams (Piping and Instrumentation Diagrams), wiring diagrams, and HMI data from control cabinets may comprise important elements of the plant that may be utilized. By incorporating this existing information, the AI processing component may build on a more comprehensive data foundation, which may increase the accuracy and efficiency of the process of topologic model generation. Furthermore, the geo-location tags may be used to determine a distance between two components, for example. Furthermore, geo-location tags may be utilized to determine the distance between two components within the industrial plant. Geo-location tags, such as GPS coordinates or other positional data, are associated with components during the data collection process. By capturing the precise location of each component, the AI processing component may calculate spatial relationships and distances between components, for example. Additionally, Operational Technology (OT) Distributed Control System (DCS) Infrastructure may be integrated. The OT DCS infrastructure may comprise physical cabinets such as enclosures housing control components like Programmable Logic Controllers (PLCs), power supplies, and communication modules, or I/O junction boxes such as connection points for input and output signals that interface between sensors, actuators, and control systems, or controllers, for example. By analyzing the physical arrangement and components of the OT DCS infrastructure, additional positional clues about the plant's topology and layout may be gathered. For example, markings and text labels on equipment, parsed from the video data, may be matched to known components in the existing documentation. This may allow for more precise identification and placement of components within the topologic model.

In an optional last step 106, the generated topologic model of the industrial plant, may be stored in a structured standard target format, such as a Piping and Instrumentation Diagram (P&ID) based on XML or a similar standardized format in a database. A Large Language Model (LLM) may process the structured data from the topologic model and converts it into a graph-based format by recognizing the relationships between components (nodes) and mapping their physical and operational connections (edges), for example. A graph-based format may provide a clear and intuitive way to visualize and manage complex systems by focusing on the relationships and interdependencies between different components. The topologic may be visualized with the computer element 46, which may be in the form of a visualization component 12, for example. The stored topologic model may be compared to a previous topologic model and/or a formal model, for example. By identifying reusable components and configurations from previous models, the AI processing component 44 may reduce the need to design elements from scratch, saving time and resources. As part of the matching of recognized components, graph comparison may be used, for example. The differences between the stored topologic model and the previous topologic model may be visualized, showing covered, missing, and redundant components, for example.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope.

### Reference Signs

- 11: imaging sensor
- 12: visualization component
- 30: processing apparatus
- 32: processor
- 34: computer program product
- 40: computer program
- 42, 44, 46: computer elements of the computer program
- 50: processing system
- 100-106: method for obtaining the topologic model

## Claims

1. Method (100) for obtaining a topologic model of one or more components of an industrial plant, the method comprising:
- (102) obtaining image data of one or more components of the industrial plant;
- (103) providing the image data of the one or more components of the industrial plant to an AI processing component (44) for processing;
- (104) receiving geometry data of the one or more components of the industrial plant based on the processed image data; and
- (105) obtaining by the AI processing component (44) the topologic model of one or more components of the industrial plant based on the geometry data of the one or more components, wherein the topologic model comprises information about a physical arrangement of the one or more components within the industrial plant.

2. The method (100) of claim 1, wherein the topologic model further comprises information about physical connections and/or input/outputs of the one or more components within the industrial plant.

3. The method (100) according to according claim 1 or 2, wherein the image data comprises geo-spatial information in the form of one or more of GPS positions, rotation angle, acceleration, and speed of movement.

4. The method (100) according to claim 3, wherein the image data further comprises geo-location tags and the method further comprises:
- determining a distance between the one or more components of the industrial plant with at least another component of the industrial plant.

5. The method (100) according to claim 4, wherein the method further comprises:
- determining a transport time of a fluid or gas between at least two components of the industrial plant based on the determined distance between the components.

6. The method (100) according to claim 4, wherein the method further comprises:
- assembling the topologic model of the one or more components to a topologic plant model of the industrial plant.

7. The method (100) according to according to any of the preceding claims, wherein a Generative AI model, is used to output the generated topologic model into a standardized format.

8. The method (100) according to claim 7, wherein the topologic model is stored in a database.

9. The method (100) according to claim 8, wherein the topologic model is compared to a previous topologic model.

10. The method (100) according to claim 9, wherein the AI processing component (44) uses graph algorithms to identify similarities between the topologic model and the previous topologic model.

11. The method (100) according to any of the preceding claims, wherein the image data is associated with existing plant model data, wherein the existing plant model data comprises at least one or more of: P&ID diagrams, wiring diagrams, Human-Machine Interface (HMI) data, or legacy data models.

12. The method (100) according to any of the preceding claims, wherein the AI processing component (44) generates an uncertainty score for the topologic model, indicating the confidence level of the generated model.

13. The method (100) according to any of the preceding claims, wherein the method further comprises contextual verification of the topologic model with an identified adjacent component.

14. One or more computer program products (34, 40) comprising instructions which, when executed by one or more data processing apparatuses (30), cause the one or more data processing apparatuses (30) to carry out the method (100) of any one of the previous claims.

15. A data processing system (50) configured to carry out the method (100) of any one of claims 1 to 13.
